(19) Europäisches Patentamt
European Patent Office
Office européen des brevets

(11) **EP 1 867 926 B1**

(12) **EUROPÄISCHE PATENTSCHRIFT**

(45) Veröffentlichungstag und Bekanntmachung des Hinweises auf die Patenterteilung:
**11.08.2010   Patentblatt 2010/32**

(51) Int Cl.:
*F24C 7/08* (2006.01)          *A47J 39/00* (2006.01)

(21) Anmeldenummer: **07011462.4**

(22) Anmeldetag: **12.06.2007**

(54) **Gargerät mit Gargutzustandsgrössenüberwachung**

Cooking device with status monitoring of the food products

Appareil de cuisson doté d'une surveillance de l'état des produits de cuisson

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **13.06.2006   DE 202006009284 U**

(43) Veröffentlichungstag der Anmeldung:
**19.12.2007   Patentblatt 2007/51**

(73) Patentinhaber: **Rational AG**
**86899 Landsberg/Lech (DE)**

(72) Erfinder: **Kramer, Gerhard**
**86929 Penzing/Untermühlhausen (DE)**

(74) Vertreter: **Weber-Bruls, Dorothée et al**
**Jones Day**
**Hochhaus am Park**
**Grüneburgweg 102**
**60323 Frankfurt am Main (DE)**

(56) Entgegenhaltungen:
| | |
|---|---|
| **EP-A- 1 253 382** | **EP-A- 1 577 653** |
| **WO-A-99/33347** | **DE-A- 4 217 943** |
| **DE-A-102004 013 553** | **DE-A-102004 052 600** |
| **DE-A1- 10 114 617** | **DE-A1- 10 337 161** |
| **DE-A1-102004 044 100** | **DE-U1- 20 023 400** |
| **US-A1- 2005 255 208** | |

**Beschreibung**

Die vorliegende Erfindung betrifft ein Gargerät zum Behandeln, insbesondere Garen, Regenerieren, Auftauen, Kühlen und/oder Trocknen von Gargut, nach dem Oberbegriff des Patentanspruchs 1.

Ein Gargerät ist beispielsweise aus der DE 103 37 161 A1 bekannt. Bei diesem Gargerät, welches einen Regenerierungsraum mit mehreren Regenerierungsebenen aufweist, ist jeder Regenerierungsebene eine alarmauslösende Uhr zugeordnet. Ein Benutzer kann über eine Eingabeeinheit manuell jeweils diejenige Uhr, die der Regenerierungsebene, in der ein Gargut eingebracht wird, zugeordnet ist, initiieren. Jede initiierte Uhr gibt nach jeweils einer vorbestimmten Zeitdauer einen Alarm aus, wobei über eine Displayeinheit die jeweilige Restzeit bis zur Auslösung des Alarms für die einzelnen Regenerierungsebenen angezeigt wird. Obwohl sich dieses Gargerät grundsätzlich bewährt hat, weist es den Nachteil auf, daß der Endzeitpunkt des Garprozesses in jeder Regenerierungsebene ausschließlich durch die vorgegebene Gardauer festgelegt wird. Insbesondere wenn unterschiedliche Gargutarten in den unterschiedlichen Regenerierungsebenen angeordnet werden bzw. für die unterschiedlichen Regenerierungsebenen unterschiedliche Garergebnisse, beispielsweise bei der Zubereitung von Fleisch "medium" oder "well done", gewünscht werden, kann das Erreichen eines gewünschten Garergebnisses nicht immer sicher gestellt werden. So ist stets noch eine ausreichende Sachkenntnis des Bedieners des Gargeräts notwendig, um über die Auswahl der Gardauer das gewünschte Garergebnis zu erzielen.

Aus der US 5,215,000 A sind ein Verfahren und eine Vorrichtung zur thermischen Behandlung von Nahrungsmitteln bekannt. Bei der Vorrichtung wird vorgeschlagen, daß innerhalb eines Regenerierungsraumes mehrere Regenerierungsebenen vorhanden sind, in denen jeweils ein Gargut angeordnet ist. Über eine Steuereinheit wird in Abhängigkeit von über Temperaturmeßfühler aufgenommene Temperaturen der jeweiligen Gargüter eine lokale Dampfzufuhr zur Steuerung der lokalen Feuchte in den jeweiligen Regenerierungsebenen gesteuert. Nachteilig bei dieser Vorrichtung ist jedoch, daß die Behandlung unterschiedlicher Gargüter in den jeweiligen Regenerierungsebenen bzw. die Erzielung unterschiedlicher Garergebnisse in den unterschiedlichen Regenerierungsebenen nicht zufriedenstellend möglich ist. Weiterhin offenbart das deutsche Gebrauchsmuster DE 203 20 927 U1 eine Vorrichtung zum gleichzeitigen individuellen Braten von Bratgut, wie Steaks. Die Vorrichtung umfaßt voneinander getrennte Ofenkammern, die in einem gemeinsamen Gehäuse angeordnet sind. Damit weißt die Vorrichtung einen konstruktiv aufwendigen Aufbau auf, da die jeweiligen Vorrichtung, wie Ofentüren usw. für jede Ofenkammer einzeln vorhanden sein müssen

Die DE 10 2004 052 660 offenbart ein Verfahren, bei dem eine Charge mit Gargütern unterschiedlichsten Kalibern optimal in einem Gargerät gegart werden kann, indem ein Kerntemperaturfühler zuerst in das Gargut der Charge mit dem kleinsten Kaliber zur Erfassung einer Ist-Kerntemperatur desselben eingeführt wird, um bei Erreichen einer Soll-Kerntemperatur des Garguts kleinsten Kalibers, das sodann aus dem Garraum des Gargeräts als fertig gegartes Gargut entfernt wird, den Kerntemperaturfühler in das Gargut mit dem dann kleinsten Kaliber einzustecken, so dass der Vorgang analog solange wiederholt wird, bis sämtliche Gargüter der Charge gegart sind. Beim Garen kann nicht nur das Erreichen einer Soll-Kerntemperatur, sondern auch eines Soll-Bräunungsgrades eingestellt werden.

Weiterhin offenbart die DE 39 09 365 A1 einen Backofen, der ebenfalls mehrere separate Backräume, die jeweils durch Türen verschlossen werden, aufweist. Aufgrund der Ausbildung separater Backräume weist auch dieser Backofen einen konstruktiv aufwendigen Aufbau auf.

Die DE 10 2004 044 100 A1 offenbart einen Backofen mit einem einzelnen Garraum. Der Nachteil dieses Backofens besteht darin, daß es einem Bediener mit unzureichender Sachkenntnis für das Garen von Lebensmitteln nicht ohne weiteres möglich ist, in dem Backofen unterschiedliche Garvorgänge mit unterschiedlichen Gargütern so durchzuführen, daß für jedes der Gargüter das vorherbestimmte gewünschte Garergebnis erreicht wird.

Dieser Nachteil ist auch bei der in der DE 200 23 400 U1 offenbarten Vorrichtung zum Erhitzen oder Kochen mehrerer Nahrungsmittel vorhanden. Um mehrere Nahrungsmittel zu garen, werden die zu garenden Lebensmittel in einer offenen Wanne oder auf einer Kochplatte angeordnet. Mittels einer Sonde wird die Kerntemperatur eines einzigen Garguts unter den mehreren zu garenden Lebensmitteln gemessen und eine Heizeinrichtung auf Basis dieser gemessenen Kerntemperatur gesteuert. Ohne ausreichende Sachkenntnisse für das Garen von Lebensmitteln ermöglicht auch diese Vorrichtung es nicht, unterschiedliche Garvorgänge mit unterschiedlichen Gargütern mit einem zufrieden stellenden Garergebnis gleichzeitig durchzuführen.

Die DE 103 32 021 B3 offenbart ein Verfahren zur Bestimmung von Parametern eines Garprozesses eines Nahrungsmittels und eine dieses benutzende Steuervorrichtung. Nach einer Erkennung einer Dicke eines Nahrungsmittels wird entschieden, ob ein nachfolgender Garprozess unter Einsatz eines Gartemperaturfühlers oder nach Eingabe des Gewichts des Nahrungsmittels ohne einen Gartemperaturfühler durchgeführt wird. Auch dieses Verfahren ermöglicht es nicht einem ungeschulten Bediener verschiedene Garprozesse für unterschiedliche Gargüter in einem Gargerät so durchzuführen, daß für die jeweiligen Gargüter ein vorherbestimmtes gewünschtes Garergebnis erzielt wird.

Weiterhin offenbart die EP 1 253 382 A1 ein Garverfahren und Gargerät mit automatischer Gargüterkennung. Bei diesem Gargerät werden die zu behandelnden Gargüter auf einer Garfläche angeordnet, die eine Vielzahl von jeweils über zumindest ein Heizelement beheizbaren zellenartigen Abschnitten umfasst. Die Bedekkung der zellenartigen Abschnitte mit Gargut wird automatisch erkannt und das Garverfahren für den jeweiligen zellenartigen Abschnitt in Abhängigkeit von der erkannten Gargutbedeckung geführt.

Aus der DE 43 02 190 A1 ist ein Verfahren und eine Vorrichtung zum Braten und Grillen oder Backen von Gargut unterschiedlicher Stärke bekannt. Eine Gargutstärke und eine Temperatur einer Gargutoberfläche wird vor und während des Garvorgangs gemessen und kontrolliert. Auch bei dieser Vorrichtung ist es einem ungeschulten Bediener nicht ohne weiteres möglich unterschiedliche Gargüter in einem gemeinsamen Garraum so zu garen, daß für jedes der Gargüter zum Ende des Garprozesses ein gewünschtes, vorherbestimmtes hochqualitatives Garergebnis erzielt wird.

Der WO 99/33347 A1 ist ein gattungsgemäßes Gargerät in Form einer Backvorrichtung zu entnehmen Die D2 offenbart ferner ein entsprechendes Backverfahren. Die Backvorrichtung weist einen mit einer Tür verschließbaren Backraum mit einer Heizvorrichtung auf. Weiterhin sind Zufuhrvorrichtungen für ein Fluid im Backraum vorhanden. In dem Backraum sind ferner Messwertgeber zum Erfassen einer Temperatur oder einer Feuchte angeordnet, die mit einer Steuervorrichtung verbunden sind. Über die Steuervorrichtung ist mit entsprechenden Eingabeorganen ein Sollwert der Luftfeuchtigkeit und/oder der Temperatur einstellbar. Mittels der Messwertgeber wird eine Abweichung eines Istwerts der Feuchtigkeit von einem Sollwert bzw. eines Istwerts der Temperatur von einem Sollwert erkannt und durch Zufuhr von Fluid der gewünschte Feuchte- bzw. Temperaturwert entsprechend eingeregelt. Diese Backvorrichtung weist jedoch den Nachteil auf, dass sie keine rollierende Beschickung unter Sicherstellung eines befriedigenden Backergebnisses ermöglicht.

Schließlich offenbart die DE 101 14 617 A1 ein gattungsgemäßes Gargerät in Form einer Vorrichtung zum Garen von Nahrungsmitteln. In einem Behandlungsraum sind mehrere Garprozessfühler in Form von Kerntemperaturfühlern angeordnet. Jeder der Kerntemperaturfühler nimmt eine Ist-Kerntemperatur eines jeweiligen Garguts auf. Bei Durchführung eines Garvorganges werden die über die Kerntemperaturfühler aufgenommenen Temperaturwerte mit jeweiligen Soll-Temperaturwerten verglichen. Sobald einer der Kerntemperaturfühler eine der jeweiligen Soll-Temperatur entsprechende Temperatur misst, wird der Garvorgang für alle Gargüter beendet. Somit weist das in der DE 101 14 617 A1 offenbarte Gargerät den Nachteil auf, daß lediglich für ein Gargut sichergestellt wird, daß ein gewünschtes Garergebnis erzielt wird. Für die anderen in dem Garraum vorhandenen Gargüter liegt eine gewünschte Soll-Kerntemperatur noch nicht vor, so daß diese Gargüter nur unzureichend gegart werden. Somit ist auch mit diesem Gargerät die Erreichung eines gewünschten, hochqualitiven Garergebnisses für eine Mehrzahl unterschiedlicher Gargüter nicht möglich.

Neben derartigen Gargeräten sind aus dem Stand der Technik auch so genannte Warmhaltegeräte bekannt. Diese Warmhaltegeräte erlauben es, ein Nahrungsmittel in einem bestimmten Zustand zu halten, ohne jedoch ein Behandeln des Nahrungsmittels zu ermöglichen. So offenbart die US 2005/0255208 A1 ein Nahrungsmittelwarmhaltegerät und ein entsprechendes Verfahren. In das Warmhaltegerät werden Speisen, die zuvor in einem Gargerät zubereitet wurden, für eine vorherbestimmte Zeitspanne warm gehalten. In dem Warmhaltegerät sind verschiedene Abteilungen ausgebildet, in denen jeweilige Strahlungswärmequellen angeordnet sind. Die Menge an zugeführter Strahlungswärme wird so gesteuert, dass das Nahrungsmittel auf einer vorherbestimmten Warmhaltetemperatur gehalten wird. Über einen Steuerungsmechanismus kann die gewünschte Warmhaltedauer voreingestellt werden, wobei nach Ablauf dieser Dauer ein Signal über Anzeigeleuchten ausgegeben wird.

Der vorliegenden Erfindung liegt daher die Aufgabe zugrunde, das gattungsgemäße Gargerät derart weiterzuentwickeln, daß die Nachteile des Stands der Technik überwunden werden. Insbesondere soll das Gargerät es auch ungeübtem Bedienpersonal ermöglichen, die gleichzeitige Zubereitung verschiedener Gargüter in unterschiedlichen Regenerierungsebenen zur Erzielung eines erwünschten hochwertigen Garergebnisses bei unterschiedlichen Gargütern und/oder unterschiedliche vorher bestimmte Garergebnisse bei gleichartigen Gargütern zu erzielen.

Diese Aufgabe wird erfindungsgemäß durch die Merkmale des kennzeichnenden Teils des Patentanspruchs 1 gelöst. Die Unteransprüche 2 bis 11 betreffen vorteilhafte Weiterentwicklungen des Gargeräts.

Der Erfindung liegt die überraschende Erkenntnis zugrunde, daß mit dem erfindungsgemäßen Gargerät für unterschiedliche Behandlungsebenen, wie beispielsweise Regenerierungsebenen, jeweils unterschiedliche Soll-Gargutzustandsgrößen, die zum Ende eines Prozesses, wie beispielsweise eines Gar- und/oder Regenerierungsprozesses, in der jeweiligen Behandlungsebene zu erreichen sind, angegeben werden können, wobei die Ist-Gargutzustandsgrößen durch Meßwertaufnehmer, wie Garprozeßfühler, insbesondere in Form von Kerntemperaturfiihlern, überwacht und mit den Soll-Gargutzustandsgrößen verglichen werden, so daß es auch ungeübtem Bedienpersonal ermöglicht wird, eine sogenannte rollierende Beschickung des Gargeräts vorzunehmen unter gleichzeitiger Sicherstellung eines gewünschten Garergebnisses in den einzelnen Regenerierungsebenen. Dabei wird unter einer rollierenden Beschickung verstanden, daß Gargüter den unterschiedlichen Regenerierungsebenen zu unterschiedlichen Zeitpunkten zugeführt werden, so daß die entsprechenden Garprozesse in den unterschiedlichen Regenerierungsebenen zeitversetzt, aber zeitlich überlappend zueinander, ablaufen. Des weiteren ermöglicht das erfindungsgemäße Gargerät, daß auch bei ungeübtem Bedienpersonal sichergestellt wird, daß, wenn unterschiedliche Garendzustände für die jeweiligen Gargüter in unterschiedlichen Regenerierungsebenen gewünscht sind, diese gewünschten Garendzustände punktgenau erreicht werden. So können, wie oft in der Praxis vorkommend, unterschiedliche Kundenwünsche hinsichtlich des Gargrads perfekt und ohne zusätzlichen Betreuungsaufwand erreicht werden. Auch das häufige Problem für unterschiedliche Gargutgrößen und/oder -dikken, insbesondere unterschiedliche Fleischstückgrößen und -dicken, sowie unterschiedliche Konsistenzen eines Garguts das Garprogramm anpassen zu müssen, wird durch das erfindungsgemäße Gargerät insofern überwunden, als daß für derartig unterschiedliche Gargüter, wenn dies erwünscht wird, ein gleichbleibendes Garprozeßergebnis sichergestellt werden kann. Dies wird insbesondere dadurch erreicht, daß über eine Eingabeeinheit eines Bedienelements, insbesondere in Form eines Touchscreens, des Gargeräts für die unterschiedlichen Regenerierungsebenen Soll-Gargutzustandsgrößen, wie eine Soll-Kemtemperatur oder aber auch ein Soll-Gargrad, wie z. B. "medium", "well done" oder dergleichen, auswählbar sind. Eine Überwachung der entsprechenden Ist-Gargutzustandsgrößen, wie z. B. Kerntemperaturen, für die unterschiedlichen Gargüter in den unterschiedlichen Regenerierungsebenen ist dabei über mehrere, vorzugsweise kabellose, Meßwertaufnehmer, wie Kerntemperaturfühler, die insbesondere auch mit mehreren Meßpunkten in einer Fühlernadel ausgestattet sein können, sichergestellt.

Bevorzugt wird die Soll-Garzustandsgröße, insbesondere der interne Gargrad, basierend auf dem sogenannten C-Wert des jeweiligen Garguts bestimmt. Im Sinne der Erfindung wird unter dem C-Wert ein quantitatives Maß für die chemische Umwandlung verschiedener Lebensmittelbestandteile bzw. -eigenschaften durch Wärmebehandlung verstanden. Der C-Wert kommt von dem englischen "cooking value - C-value". Bei einer schonenden Behandlung von Lebensmittel, beispielsweise bei einer Sterilisation, ist als analoger Wert der Pasteurisierungs-Wert (P-Wert) bekannt. Genauer wird bei der Berechnung des C-Wertes ein Umsatz durch eine chemische Reaktion 2. Ordnung berechnet. So ist ein Ansatz zur Berechnung des C-Wertes:

$$C^{UF}_{BT} = \int_{St}^{t'} UF^{\frac{[T(t)-BT]}{10}} dt \,,$$

wobei

UF = Umrechnungsfaktor,

BT = Bezugstemperatur = 100°C,

T(t) = Kerntemperaturverlauf,

St = Zeitpunkt, bei dem eine Starttemperatur überschritten wurde, abhängig vom Lebensmittel und

t' = Ist-Zeit gilt.

Es wird also ein Integral über eine Exponential-Funktion gebildet, den man den C-Wert oder den P-Wert nennt. Der C-Wert gibt an, welcher prozentuale Anteil der Gare des Lebensmittels erreicht ist. Dabei wirkt die Kombination aus Zeit und Temperatur.

Bei einem Vorgaren werden Lebensmittel zunächst nicht ganz fertig gegart und anschließend zur Zwischenlagerung gekühlt. Später können die Lebensmittel dann schnell auf die Verzehrtemperatur gebracht werden, ohne daß die Lebensmittel dabei übergaren, ein sogenanntes Finishing des Lebensmittels. Durch die Wirkung der Bedingungen (Temperatur, Feuchte, Luftgeschwindigkeit und Zeit) auf die Lebensmittel im Garraum des Gargeräts sollen dann die gewünschten Ergebnisse (Kerntemperatur - das ist die Temperatur im Inneren des Lebensmittels, Bräunung der Oberfläche, Konsistenz - maßgeblich beeinflußt durch den C-Wert) erzielt werden.

Es ist erfindungsgemäß vorgeschen, daß mittels der über den Meßwertaufnehmer einer jeden Behandlungsebene, wie Regenierungseben, aufgenommenen Meßwerte ein Zeitpunkt extrapoliert wird, zu dem der gewünschte Garendzustand in jeder Behandlungsebene erreicht wird, während über das Display die entsprechende Restgardauer kontinuierlich angezeigt wird. Auch ist es erfindungsgemäß bevorzugt, daß die Belegung der jeweiligen Regenerierungsebenen mit Gargut dadurch erkannt wird, daß die von den diesen Regenrierungsebenen zugeordneten Meßwertaufnehmer aufgenommene Meßwerte analysiert werden, wobei beispielsweise erkannt wird, ob ein Meßwertaufnehmer in ein Gargut eingeführt wurde. Selbstverständlich ist das erfindungsgemäße Gargerät ebenso zum optimalen Garen, Auftauen, Kühlen und/oder Trocknen in einer Vielzahl von Ebenen in dem Behandlungsraum in analoger Weise verwendbar.

Weitere Merkmale und Vorteile der Erfindung ergeben sich aus der nachfolgenden detaillierten Beschreibung einer Ausführungsform der Erfindung unter Bezugnahme auf die beigefügten Zeichnungen. Dabei zeigt:

Figur 1 eine schematische Ansicht eines erfindungsgemäßen Gargeräts; und

Figur 2 einen Ausschnitt eines Bedienelements eines erfindungsgemäßen Gargeräts.

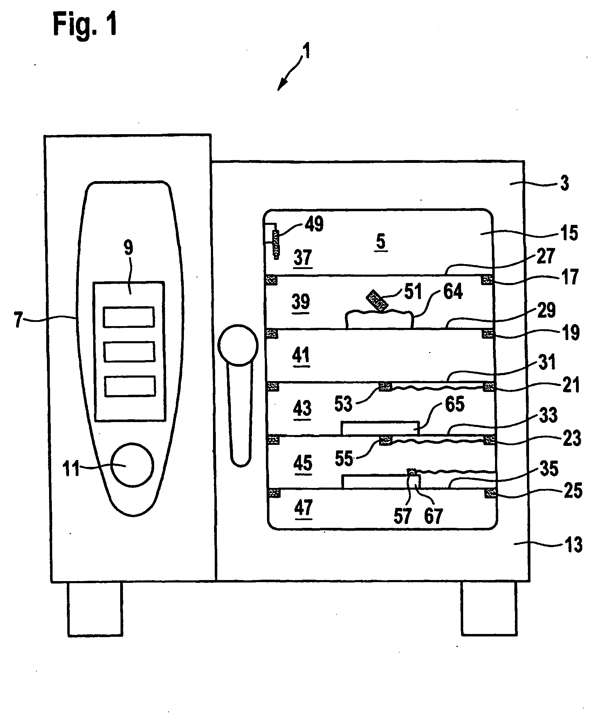

Figur 1 zeigt eine schematische Ansicht eines erfindungsgemäßen Gargeräts 1. Das Gargerät 1 umfaßt ein Gehäuse 3, in dem sich ein Regenerierungsraum in Form eines Garraums 5 befindet. Darüber hinaus umfaßt das Gargerät 1 ein Bedienelement 7, umfassend ein Display 9 sowie eine Eingabeeinheit in Form eines Auswahltasters 11. Der Garraum 5 wird über eine Garraumtür 13 verschlossen, die ein Fenster 15 aufweist. Das Fenster 15 erlaubt es, in das Innere des Garraums 5 zu blicken. Wie Figur 1 zu entnehmen ist, sind innerhalb des Garraums 5 Aufnahmevorrichtungen 17, 19, 21, 23, 25 vorgesehen. Die Aufnahmevorrichtungen 17, 19, 21, 23, 25 erlauben es, den Garraum 5 durch Einschübe in Form von Blechen 27, 29, 31, 33, 35 in Regenerierungsebenen 37, 39, 41, 43, 45, 47 zu unterteilen, auf denen Gargut 64, 65, 67 anordbar sind. Den jeweiligen Regenerierungsebenen 37, 39, 41, 43, 45, 47 sind Meßwertaufnehmer in Form von Garprozeßfühlern 49, 51 bzw. mit den Blechen 31, 33 in thermischem Kontakt stehenden Thermosensoren 53, 55 bzw. eines mit einer Gargutoberfläche in thermischen Kontakt bringbaren Thermosensors 57 zugeordnet.

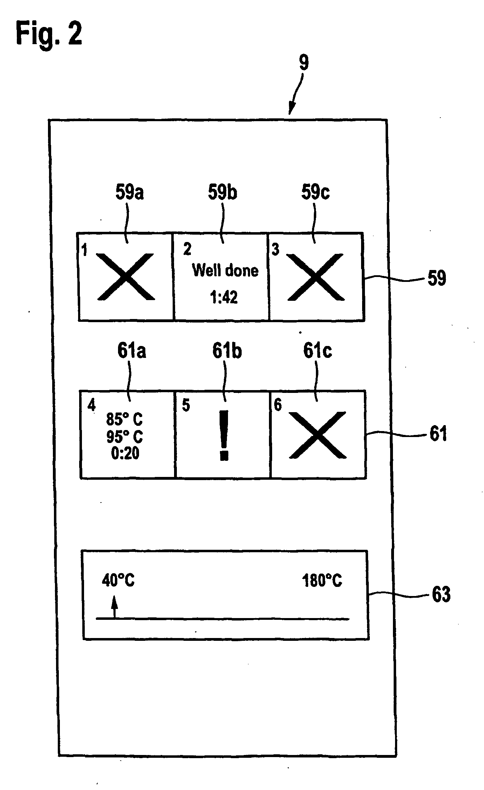

In Figur 2 ist eine Detailansicht des Displays 9 des in Figur 1 dargestellten Gargeräts 1 dargestellt. Das Display 9 zeigt in der in Figur 2 dargestellten Betriebssituation drei Anzeigesegmente 59, 61, 63 an. Die Anzeigesegmente 59, 61 sind in Teilsegmente 59a, 59b, 59c, 61a, 61b, 61c unterteilt. Die jeweiligen Teilsegmente sind den einzelnen Regenerierungsebenen zugeordnet, d.h. die Teilsegmente 59a, 59b, 59c sind der ersten Regenerierungsebene 37, der zweiten Regenerierungsebene 39 bzw. der dritten Regenerierungsebene 41 und die Teilsegmente 61a, 61b, 61c, der vierten Regenerierungsebene 43, der fünften Regenerierungsebene 45 bzw. der sechsten Regenerierungsebene 47 zugeordnet. Wie später erläutert werden wird, dient das Anzeigesegment 63 dazu, eine Soll-Gargutzustandsgröße, wie eine Kerntemperatur, die am Ende eines Garprozesses erreicht werden soll, bzw. einen Gargrad, der am Ende eines Garprozesses erreicht werden soll, einzugeben.

Im folgenden wird nun die Funktionsweise des erfindungsgemäßen Gargeräts 1 erläutert:

In der ersten Regenerierungsebene 37 befindet sich kein Gargut und der dort angeordnete Garprozeßfühler 49 ist über eine nicht dargestellte Steckverbindung mit einer nicht dargestellten Regel- und/oder Steuereinheit des Gargeräts 1 verbunden. Der Garprozeßfühler 49 weist eine Fühlernadel, die in ein Gargut zumindest teilweise eingeführt werden kann, und einen Griff zur Erleichterung der Bedienung auf. Die Fühlernadel weist mehrere Meßpunkte, an denen unterschiedliche Sensoren zur Aufnahme verschiedener Ist-Gargutzustandsgrößen, wie Temperaturen, Feuchten oder Leitfähigkeiten, aufgenommen werden können, auf. Die Regel- und/oder Steuereinheit des Gargeräts 1 erkennt einerseits, daß der Garprozeßfühler 49 angeschlossen ist, andererseits wird durch die Analyse der über den Garprozeßfühler 49 aufgenommenen Meßwerte erkannt, daß der Garprozeßfühler 49 nicht in ein Gargut eingesteckt ist. Entsprechend zeigt das Teilsegment 59a an, daß sich in der ersten Regenerierungsebene 37 kein Gargut befindet.

Der zweiten Regenerierungsebene 39 ist ein Garprozeßfühler 51 zugeordnet. Im Gegensatz zu dem Garprozeßfühler 49 ist der Garprozeßfühler 51 nicht über eine Drahtverbindung mit der Regel- und/oder Steuereinheit des Gargeräts 1 verbunden, sondern über eine drahtlose Verbindung in Form einer Funkverbindung. Im Gegensatz zu dem Garprozeßfühler 49 ist die Fühlernadel des Garprozeßfühlers 51 ferner in ein Gargut 64 eingeführt. Bei dem Gargut 64 handelt es sich beispielsweise um ein Steak. Bei der Belegung der zweiten Regenerierungsebene 39 durch einen Benutzer hat dieser über das Bedienelement 7 eine Soll-Gargutzustandsgröße für das Gargut 64 derart vorgegeben, daß zum Endzeitpunkt des Garprozesses in der Regenerierungsebene 39 das Steak den Gargrad "well done" haben soll. Dazu hat der Bediener über den Auswahltaster 11 sowie das Anzeigesegment 63 eine entsprechende Auswahl vorgenommen. In einer alternativen, nicht dargestellten Ausführungsform handelt es sich bei dem Display 9 um einen Touchscreen, so daß im wesentlichen auf den Auswahltaster 11 verzichtet werden, durch Drücken auf das Teilsegment 59b die zweite Regenerierungsebene 39 ausgewählt und durch Drücken auf das Anzeigesegment 63 eine Auswahl der Soll-Gargutzustandsgröße am Ende des Garprozesses in der Regenerierungsebene 39 ausgewählt werden kann. Wie dem Teilsegment 59b zu entnehmen ist, wird einerseits in dem Teilsegment 59b die vorgewählte Soll-Gargutzustandsgröße angezeigt. Andererseits ist in einer besonders bevorzugten Ausführungsform vorgesehen, daß die über den Garprozeßfühler 51 aufgenommenen Meßwerte derartig analysiert werden, daß ein voraussichtlicher Garendzeitpunkt extrapoliert wird. Das Teilsegment 59b zeigt daher die Restdauer bis zu dem extrapolierten Garprozeßende an.

Wie Figur 1 weiterhin zu entnehmen ist, ist der dritten Regenerierungsebene 41 ein Thermosensor 53 zugeordnet. Dieser Thermosensor 53 ist über eine nicht dargestellte Steckverbindung mit der Regel- und/oder Steuereinheit des Gargeräts 1 verbunden. Darüber hinaus befindet sich der Thermosensor 53 in thermischem Kontakt mit dem Blech 31. Aufgrund der über den Thermosensor 53 aufgenommenen Meßwerte wird ebenfalls erkannt, daß sich in der dritten Regenerierungsebene 41 kein Gargut befindet, was durch die Anzeige "X" im Teilsegment 59c zum Ausdruck kommt.

Hingegen ist die vierte Regenerierungsebene 43 mit einem Gargut 65 belegt. Bei dem Gargut 65 handelt es sich um Hefebackwaren, so daß anstelle eines Garprozeßfühlers, der in das Gargut 65 eingesteckt wird, ein Thermosensor 55 eingesetzt wird, der über das Blech 33 in thermischem Kontakt mit dem Gargut 65 steht. Dadurch, daß der Thermosensor 55 mit der Regel- und/oder Steuereinheit des Gargerät 1 verbunden ist und über den Thermosensor 55 Meßwerte aufgenommen werden können, wird erkannt, daß die vierte Regenerierungsebene 43 mit dem Gargut 65 belegt ist. Bei Einbringung des Garguts 65 in die vierte Regenerierungsebene 43 hat ein Benutzer über das Bedienelement 7 eine Soll-Gargutzustandsgröße in Form einer gewünschten Endoberflächentemperatur des Garguts 65 vorgegeben. Wie dem Teilsegment 61 a zu entnehmen ist, wurde als Endtemperatur über den Auswahltaster 11 mit Hilfe des Teilsegments 63 die Oberflächengarguttemperatur 95 °C ausgewählt. Wie dem Teilsegment 61 a ferner zu entnehmen ist, wird in diesem ebenfalls die Ist-Gargutzustandsgröße in Form der momentanen Oberflächentemperatur von 85 °C angegeben. In dem Teilsegment 61a wird ferner ein extrapolierter Zeitraum bis zum Erreichen des Garprozeßendes, was voraussichtlich in 20 Sekunden erreicht sein wird, angezeigt.

In der fünften Regenerierungsebene 45 ist ein Gargut 67 angeordnet, dessen Oberfläche mit dem Thermosensor 57 in thermischem Kontakt steht. Der Thermosensor 57 ist ebenfalls über eine Drahtverbindung mit der Regel- und/oder Steuereinheit des Gargeräts 1 verbunden. Wie dem Teilsegment 61b zu entnehmen ist, wurde für das Gargut 67 bereits das Garprozeßende erreicht. Um dies anzuzeigen, wird in dem Teilsegment 61b ein visueller Alarm ausgegeben, in Form eines blinkenden Zeichens "!". Darüber hinaus ist in dem Bedienelement 7 eine weitere Ausgabeeinheit in Form einer nicht gezeigten akustischen Alarmeinheit vorhanden. Dadurch wird der Benutzer ebenfalls auf das Erreichen des Garprozeßendes für das Gargut 67 in der fünften Regenerierungsebene 45 hingewiesen.

Schließlich ist dem Teilsegment 61c zu entnehmen, daß sich in der sechsten Regenerierungsebene 47 kein Gargut befindet. Dies wird dadurch erkannt, daß weder ein drahtloser noch ein drahtgebundener Meßwertaufnehmer, der der sechsten Regenerierungsebene 47 zugeordnet ist, mit der Regel- und/oder Steuereinheit des Gargeräts 1 verbunden ist.

Somit ermöglicht es das erfindungsgemäße Gargerät erstmals, eine rollierende Beschickung derart vorzunehmen, daß im wesentlichen ein vollautomatischer Garprozeß für verschiedene Gargüter in verschiedenen Regenerierungsebenen durchgeführt werden kann, ohne daß es besonderer Zusatzkenntnisse des Bedienpersonals bedarf. So können beispielsweise gleichartige Speisen zu unterschiedlichen Zeiten in die Regenerierungsebenen eingebracht werden und eine Soll-Gargutzustandsgröße, beispielsweise eine gewünschte Kerntemperatur, für die jeweilige Regenerierungsebene eingegeben werden, woraufhin das Gargerät den Garprozeß in der jeweiligen Regenerierungsebene mittels der über den Meßwertaufnehmer aufgenommenen Meßwerte überwacht und einen Alarm ausgibt, sobald das gewünschte Garergebnis in der jeweiligen Regenerierungsebene erreicht wird. Insbesondere ermöglicht es das erfindungsgemäße Gargerät, daß wie oft in der Praxis vorkommend, unterschiedliche Kundenwünsche hinsichtlich des Gargrads perfekt und ohne zusätzlichen Betreuungsaufwand erreicht werden. Beispielsweise kann eine erste Regenerierungsebene mit einem Steak belegt werden, welches "well done" gegart werden soll, während eine zweite Regenerierungsebene mit einem Steak belegt wird, welches lediglich "blutig" gegart werden soll. Durch die Verwendung der entsprechenden Meßwertaufnehmer werden einerseits die unterschiedlichen Geometrien der Steaks beachtet und andererseits sichergestellt, daß für die jeweilige Regenerierungsebene zu dem Zeitpunkt ein Alarm ausgegeben wird, zu dem das gewünschte Garergebnis für die jeweilige Regenerierungsebene erreicht ist. Darüber hinaus ermöglicht es das erfindungsgemäße Gargerät, daß Veränderungen des Klimas in dem Garraum 5 automatisch in die Steuerung des Garverlaufs in den unterschiedlichen Regenerierungsebenen einfließen, so daß eine Anpassung einer gewünschten Gardauer, wie sie insbesondere in der DE 103 37 161 A1 vorgesehen ist, hinfällig wird.

Die in der vorstehenden Beschreibung, in den Zeichnungen sowie in den Ansprüchen offenbarten Merkmale der Erfindung können sowohl einzeln als auch in jeder beliebigen Kombination zur Verwirklichung der Erfindung in ihren verschiedenen Ausführungsformen wesentlich sein.

**Patentansprüche**

1.   Gargerät (1) zum Behandeln, insbesondere Garen, Regenerieren, Auftauen, Kühlen und/oder Trocknen, von Gargut (64, 65, 67) in einem Behandlungsraum (5) mit zumindest zwei unterschiedlichen Behandlungsebenen (37, 39, 41, 43, 45, 47), insbesondere festgelegt durch zumindest einen Einschub (27, 29, 31, 33, 35), wobei das Gargerät eingerichtet ist, um für jede Behandlungsebene (37, 39, 41, 43, 45, 47) separat zumindest einen Parameter zumindest eines Programms zur Steuerung eines Prozesses zumindest eines in der jeweiligen Behandlungsebene (37, 39, 41, 43, 45, 47) angeordneten Garguts (64, 65, 67) einzustellen,
der zumindest eine Parameter zumindest eine Soll-Gargutzustandsgröße des in der jeweiligen Behandlungsebene (37, 39, 41, 43, 45, 47) angeordneten Garguts (64, 65, 67) ist und ferner ein Meßwertaufnehmer (49, 51, 53, 55, 57) zur Bestimmung zumindest einer Ist-Gargutzustandsgröße des in der jeweiligen Behandlungsebene (37, 39, 41, 43, 45, 47) angeordneten Garguts (64, 65, 67) vorgesehen ist,
**dadurch gekennzeichnet, dass**,
wenn unterschiedliche Garendzustände für die jeweiligen Gargüter (64, 65, 67) in unterschiedlichen Behandlungsebenen (37,39,41,43,45,47) gewünscht sind, diese gewünschten Garendzustände **dadurch** punktgenau erreicht werden, dass
der zumindest eine Parameter jeder Behandlungsebene (37, 39, 41, 43, 45, 47) diejenige Soll-Gargutzustandsgröße ist, die bei Beendigung des jeweiligen Prozesses in der jeweiligen Behandlungsebene (37, 39, 41, 43, 45, 47) zu erreichen ist, die Soll-Gargutzustandsgröße als ein interner Gargrad und ein externer Gargrad ausgewählt ist, und

mittels zumindest einer Ausgabeeinheit (9) visuell zumindest eine Zeitspanne bis zum extrapolierten Prozessende für jede Behandlungsebene (37, 39, 41, 43, 45, 47) anzeigbar ist, wobei mittels der über den Messwertaufnehmer (49, 51, 53, 55, 57) einer jeden Behandlungsebene aufgenommenen Messwerte ein Zeitpunkt extrapoliert wird, zu dem der gewünschte Garendzustand in jeden Behandlungsebene erreicht wird, während über die Ausgabeeinheit (9) die Zeitspanne kontinuierlich angezeigt wird.

2. Gargerät nach Anspruch 1, **dadurch gekennzeichnet, dass**
der interne Gargrad durch eine Kerntemperatur des Gargutes (64) und/oder zumindest einen C-Wert des Gargutes (64) bestimmt ist, und/oder
der externe Gargrad durch eine Oberflächentemperatur des Gargutes (65, 67) bestimmt ist, und/oder als weitere Soll-Garzustandsgröße eine geometrischen Abmessung, insbesondere bestimmt durch den Durchmesser und/oder die Dicke des Garguts, und/oder eine Dichte des Garguts und/oder eine Gargutart, ausgewählt ist.

3. Gargerät nach Anspruch 1 oder 2, **gekennzeichnet durch** zumindest ein Bedienelement (7), umfassend zumindest eine Eingabeeinheit (11), wobei insbesondere über die Eingabeeinheit (11) zumindest das Programm, die Soll-Gargutzustandsgröße und/oder zumindest ein weiterer Parameter des Programms, wie eine Gargutart, ein Gargutgewicht und/oder eine Gargutabmessung, vorzugsweise separat für jede Behandlungsebene (37, 39, 41, 43, 45, 47), auswählbar und/oder eingebbar ist.

4. Gargerät nach einem der vorangehenden Ansprüche, **dadurch gekennzeichnet, dass** der Meßwertaufnehmer (49, 51) mit dem Gargut (64, 65, 67), vorzugsweise zumindest einer Gargutoberfläche und/oder zumindest einem Gargutinneren in Kontakt bringbar ist.

5. Gargerät nach Anspruch 4, **dadurch gekennzeichnet, dass** der Meßwertaufnehmer (49, 51, 53, 57) zumindest einen Sensor zur Erfassung und/oder zur Extrapolation oder Iteration der Ist-Gargutzustandsgröße des Gargutes (64, 65, 67) umfaßt.

6. Gargerät nach einem der vorangehenden Ansprüche,
**dadurch gekennzeichnet, dass**
der Meßwertaufnehmer in Form zumindest eines, insbesondere zumindest teilweise in ein Gargut (64) einführbaren, Garprozeßfühlers (49, 51), zumindest einer auf zumindest einer Oberfläche des Garguts (67) anordbaren Meßeinrichtung (57) und/oder zumindest eines mit zumindest dem Einschub, wie einem Blech (31, 33) und/oder einer Wanne, insbesondere thermisch, in Kontakt bringbaren Meßeinrichtung (53, 55), ausgebildet ist.

7. Gargerät nach einem der vorangehenden Ansprüche, **dadurch gekennzeichnet, dass** jeder Behandlungsebene (37, 39, 41, 43, 45, 47) zumindest ein Segment (59a, 59b, 59c, 61 a, 61b, 61 c) der Ausgabeeinheit (9) zugeordnet ist.

8. Gargerät nach einem der vorangehenden Ansprüche, **dadurch gekennzeichnet, dass**
die Ausgabeeinheit (9) von dem Bedienelement (7) umfaßt ist.

9. Gargerät nach einem der Ansprüche 4 bis 8, **dadurch gekennzeichnet, dass** die Belegung zumindest einer Behandlungsebene (37, 39, 41, 43, 45, 47), vorzugsweise aller Behandlungsebenen, mit Gargut (64, 65, 67), die Plazierung zumindest eines Meßwertaufnehmers (49, 51, 53, 55, 57) in und/oder an dem Gargut (64, 65, 67) und/oder die Verbindung zumindest eines Meßwertaufnehmers (49, 51, 53, 55, 57) mit dem Gargerät (1) mittels durch zumindest eines der Meßwertaufnehmer (49, 51, 53, 55, 57) erfaßten Meßwerte, insbesondere über deren Zeitabhängigkeit, bestimmbar ist.

10. Gargerät nach einem der vorangehenden Ansprüche, **gekennzeichnet durch** zumindest eine Steuer- oder Regeleinheit in Wirkverbindung, insbesondere in drahtloser Verbindung, wie zumindest einer Funkverbindung, zumindest einer Ultraschallverbindung und/oder zumindest einer Infrarotverbindung, mit dem Bedienelement (7), insbesondere der Eingabeeinheit (11), der Ausgabeeinheit (9), zumindest einem Meßwertaufnehmer (49, 51, 53, 55, 57) und/oder dem zumindest einen Einschub (27, 29, 31, 33, 35).

11. Gargerät nach einem der vorangehenden Ansprüche, **dadurch gekennzeichnet, dass** zumindest eine Soll- Gargutzustandsgröße von einer Bedienperson eingebbar oder automatisch einstellbar ist, vorzugsweise nach automatischer Gargutart-Erkennung mittels des Meßwertaufnehmers.

**Claims**

1. A cooking device (1) for the treatment, in particular the cooking, regeneration, defrosting, cooling and/or drying of food products (64, 65, 67) in a treatment chamber (5) with at least two different treatment layers (37, 39, 41, 43, 45, 47), in particular defined by at least one insertion (27, 29, 31, 33, 35), wherein the cooking device is arranged to separately set for each treatment layer (37, 39, 41, 43, 45, 47) at least one parameter of at least one programme in order to control a process of at least one food product (64, 65, 67) placed in the respective treatment layer (37, 39, 41, 43, 45, 47),

the at least one parameter is at least one set value of a food product condition of the food product (64, 65, 67) which is placed in the respective treatment layer (37, 39, 41, 43, 45, 47), and furthermore a sensing device (49, 51, 53, 55, 57) for determining at least one actual value of a food product condition of the food product (64, 65, 67) which is placed in the respective treatment layer (37, 39, 41, 43, 45, 47), **characterized in that**

when different cooking end conditions for the respective food products (64, 65, 67) are desired in different treatment layers (37, 39, 41, 43, 45, 47), these desired cooking end conditions are achieved to the point **in that**

the at least one parameter of each treatment layer (37, 39, 41, 43, 45, 47) is the set value of the food product condition which is to be achieved when terminating the respective process in the respective treatment layer (37, 39, 41, 43, 45, 47), the set value of the food product condition is selected as an internal degree of cooking and an external degree of cooking, and

by at least one output unit (9), at least one time period up to the extrapolated process end for each treatment layer (37, 39, 41, 43, 45, 47) can be visually displayed, wherein by the measured values which are gathered via the sensing device (49, 51, 53, 55, 57) of each treatment layer, a time point is extrapolated at which the required cooking end condition in each treatment layer is achieved, while

via the output unit (9), the time period is shown continuously.

2. A cooking device according to claim 1, **characterized in that** the internal degree of cooking is determined by a core temperature of the food product (64) and/or at least one C-value of the food product (64), and/or

the external degree of cooking is determined by a surface temperature of the food product (65, 67), and/or

as a further set value of a cooking condition a geometric dimension is selected, in particular defined by the diameter and/or the thickness of the food product, and/or a density of the food product, and/or a type of food product.

3. A cooking device according to claim 1 or 2, **characterized by**
at least one operating element (7) comprising at least one input unit (11), wherein in particular via the input unit (11), at least the programme, the set value of a food product condition and/or at least one further parameter of the programme such as a type of food product, a food product weight and/or a food product dimension, can be selected and/or entered, preferably separately for each treatment layer (37, 39, 41, 43, 45, 47).

4. A cooking device according to any one of the preceding claims, **characterized in that**
the sensing device (49, 51) can be brought into contact with the food product (64, 65, 67), preferably at least with one food product surface and/or at least one food product inside area.

5. A cooking device according to claim 4, **characterized in that**
the sensing device (49, 51, 53, 55, 57) comprises at least one sensor for sensing and/or extrapolating or iterating the actual value of a food product condition of the food product (64, 65, 67).

6. A cooking device according to any one of the preceding claims
**characterized in that**
the sensing device is designed in the form of at least one cooking process probe (49, 51), which in particular can at least partially be inserted into a food product (64), at least of one measuring device (57) which can be placed on at least one surface of the food product (67) and/or at least of one measuring device (53, 55) which can be brought into contact, in particular thermally, with at least the insertion, such as a baking tray (31, 33) and/or a pan.

7. A cooking device according to any one of the preceding claims, **characterized in that**
each treatment layer (37, 39, 41, 43, 45, 47) is assigned at least one segment (59a, 59b, 59c, 61 a, 61 b, 61 c) of the output unit (9).

8. A cooking device according to any one of the preceding claims, **characterized in that**
the output unit (9) is comprised by the operating element (7).

9. A cooking device according to any one of claims 4 to 8, **characterized in that** the occupancy of at least one treatment layer (37, 39, 41, 43, 45, 47), preferably of all treatment layers, with a food product (64, 65, 67), the positioning of at least one sensing device (49, 51, 53, 55, 57) in and/or on the food product (64, 65, 67) and/or the connection of at least one sensing device (49, 51, 53, 55, 57) to the cooking device (1) can be determined by at least one of the measured values gathered by the sensing device (49, 51, 53, 55, 57), in particular based on their time dependence.

10. A cooking device according to any one of the preceding claims, **characterized by**

at least one control or regulating unit which is actively connected to the operating element (7), in particular via a wireless connection, such as at least one radio connection, at least one ultrasound connection and/or at least one infrared connection, especially, to the input unit (11), the output unit (9), at least one sensing device (49, 51, 53, 55, 57) and/or the at least one insertion (27, 29, 31, 33, 35).

11. A cooking device according to any one of the preceding claims, **characterized in that** at least one set value of a food product condition can be entered by an operator, or can be automatically set, preferably following an automatic food product type recognition via the sensing device.

## Revendications

1. Appareil de cuisson (1) pour le traitement, en particulier la cuisson, la régénération, la décongélation, le tiédissement et/ou le séchage d'un produit à cuire (64, 65, 67) dans un compartiment de traitement (5) avec au moins deux plans de traitement (37, 39, 41, 43, 45, 47) différents, défini en particulier grâce à au moins un élément enfichable (27, 29, 31, 33, 35), l'appareil de cuisson étant conçu pour ajuster au moins un paramètre d'au moins un programme, de manière séparée pour chaque plan de traitement (37, 39, 41, 43, 45, 47), afin de commander un processus d'au moins un produit à cuire (64, 65, 67) disposé dans les plans de traitement (37, 39, 41, 43, 45, 47) respectif,
le au moins un paramètre étant au moins une valeur théorique d'état de produit à cuire du produit à cuire (64, 65, 67) disposé dans le plan de traitement (37, 39, 41, 43, 45, 47) respectif et un capteur de mesure (49, 51, 53, 55, 57) destiné à la détermination d'au moins une valeur effective d'état de produit à cuire du produit à cuire (64, 65, 67) disposé dans le plan de traitement (37, 39, 41, 43, 45, 47) respectif étant au moins prévu,
**caractérisé en ce que**
quand des états finaux de cuisson différents pour les produits à cuire (64, 65, 67) respectifs sont souhaités dans différents plans de traitement (37, 39, 41, 43, 45, 47), ces états finaux de cuisson souhaités sont atteints avec précision grâce au fait que
le au moins un paramètre de chaque plan de traitement (37, 39, 41, 43, 45, 47) correspond à la valeur théorique d'état de produit à cuire qui doit être atteinte lors de l'achèvement du processus respectif dans le plan de traitement (37, 39, 41, 43, 45, 47) respectif, la valeur théorique d'état de produit à cuire étant choisie sous forme d'un degré de cuisson interne et d'un degré de cuisson externe, et au moins une période de temps allant jusqu'à la fin extrapolée du processus peut être affiché visuellement pour chaque plan de traitement (37, 39, 41, 43, 45, 47) au moyen d'au moins une unité de sortie (9), un point temporel, auquel l'état final de cuisson souhaité sera atteint dans chaque plan de traitement, étant extrapolé au moyen des valeurs de mesure enregistrées par l'intermédiaire du capteur de mesure (49, 51, 53, 55, 57) d'un plan de traitement respectif, tandis que la période de temps est affichée en continu par l'intermédiaire de l'unité de sortie (9).

2. Appareil de cuisson selon la revendication 1, **caractérisé en ce que** le degré de cuisson interne est déterminé par une température centrale du produit à cuire (64) et/ou au moins une valeur C du produit à cuire (64), et/ou
le degré de cuisson externe est déterminé par une température de surface du produit à cuire (65, 67), et/ou
une dimension géométrique, en particulier déterminée par le diamètre et/ou l'épaisseur du produit et cuire à, et/ou une densité du produit à cuire et/ou un type de produit à cuire, est sélectionnée en tant qu'autre valeur théorique d'état de cuisson.

3. Appareil de cuisson selon la revendication 1 ou 2, **caractérisé par** au moins un élément de commande (7), comprenant au moins une unité d'entrée (11), au moins le programme, la valeur théorique d'état du produit à cuire et/ou au moins un autre paramètre du programme, comme un type de produit à cuire, un poids de produit à cuire et/ou une dimension de produit à cuire pouvant être sélectionnés et/ou entrés, de préférence de manière séparée pour chaque plan de traitement (37, 39, 41, 43, 45, 47), en particulier par l'intermédiaire de l'unité d'entrée (11).

4. Appareil de cuisson selon l'une quelconque des revendications précédentes, **caractérisé en ce que** le capteur de mesure (49, 51) peut être mis en contact avec le produit à cuire (64, 65, 67), de préférence au moins une surface de produit à cuire et/ou au moins un intérieur de produit à cuire.

5. Appareil de cuisson selon la revendication 4, **caractérisé en ce que** le capteur de mesure (49, 51, 53, 55, 57) comprend au moins un capteur pour l'enregistrement et/ou pour l'extrapolation ou l'itération de la valeur effective d'état de produit à cuire du produit à cuire (64, 65, 67).

6. Appareil de cuisson selon l'une quelconque des revendications précédentes, **caractérisé en ce que** le capteur de mesure sous la forme d'au moins un détecteur de processus de cuisson (49, 51), pouvant en particulier être introduit au moins partiellement dans un produit à cuire (64), est constitué d'au moins un dispositif de mesure (57) pouvant être disposé sur au moins une surface du produit à cuire (67) et/ou d'au moins un dispositif de mesure (53, 55) pouvant être mis en contact, en particulier thermiquement, avec au moins l'élément enfichable, comme une tôle (31, 33) et/ou un bac.

7. Appareil de cuisson selon l'une quelconque des revendications précédentes, **caractérisé en ce que** au moins un segment (59a, 59b, 59c, 61 a, 61 b, 61 c) de l'unité de sortie (9) est associé à un plan de traitement (37, 39, 41, 43, 45, 47) respectif.

8. Appareil de cuisson selon l'une quelconque des revendications précédentes, **caractérisé en ce que** l'unité de sortie (9) fait partie de l'élément de commande (7)

9. Appareil de cuisson selon l'une quelconque des revendications 4 à 8, **caractérisé en ce que** le chargement d'au moins un plan de traitement (37, 39, 41, 43, 45, 47), de préférence de tous les plans de traitement, avec un produit à cuire (64, 65, 67), le placement d'au moins un capteur de mesure (49, 51, 53, 55, 57) dans et/ou sur le produit à cuire (64, 65, 67) et/ou la liaison d'au moins un capteur de mesure (49, 51, 53, 55, 57) avec l'appareil de cuisson (1) peuvent être déterminés au moyen de valeurs de mesure enregistrées grâce à au moins un des capteurs de mesure (49, 51, 53, 55, 57), en particulier par l'intermédiaire de leur dépendance au temps.

10. Appareil de cuisson selon l'une quelconque des revendications précédentes, **caractérisé par** au moins un dispositif de commande ou régulation en liaison fonctionnelle, en particulier par liaison sans fil, comme au moins une liaison radio, au moins une liaison par ultrasons et/ou au moins une liaison par infrarouge, avec l'élément de commande (7), en particulier l'unité d'entrée (11), l'unité de sortie (9), au moins un capteur de mesure (49, 51, 53, 55, 57) et/ou le au moins un élément enfichable (27, 29, 31, 33, 35).

11. Appareil de cuisson selon l'une quelconque des revendications précédentes, **caractérisé en ce que** au moins une valeur théorique d'état de produit à cuire peut être entrée par un opérateur ou peut être ajustée de manière automatique, de préférence après reconnaissance automatique du type de produit à cuire au moyen du capteur de mesure.

## Fig. 1

## Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10337161 A1
- US 5215000 A
- DE 20320927 U1
- DE 102004052660
- DE 3909365 A1
- DE 102004044100 A1
- DE 20023400 U1

- DE 10332021 B3
- EP 1253382 A1
- DE 4302190 A1
- WO 9933347 A1
- DE 10114617 A1
- US 20050255208 A1